# EUROPÄISCHE PATENTANMELDUNG

(11) **EP 3 772 199 A1**
(43) Veröffentlichungstag der Anmeldung: **03.02.2021**
(21) Anmeldenummer: 19189823.8
(22) Anmeldetag: 02.08.2019
(51) Int. Cl.: H04L 12/24, H04L 12/26

(54) **DETERMINISTISCHER NETZWERKEMULATOR UND VERFAHREN ZUM EMULIEREN EINES NETZWERKS**

(71) Anmelder: Siemens Aktiengesellschaft, 80333 München (DE)
(72) Erfinder: Sakic, Ermin, 81379 München (DE)

(57) **Zusammenfassung**

Es wird ein deterministischer Netzwerkemulator zum Emulieren eines Netzwerks bereitgestellt, welcher umfasst:
eine Switcheinrichtung, die als programmierbare Hardware realisiert ist und eine Vielzahl von Hardwarekomponenten umfasst; und
eine Softwareeinrichtung zum Programmieren der Switcheinrichtung, wobei das Programmieren ein Bereitstellen einer zu testenden Netzwerktopologie sowie einer zu testenden Netzwerkfunktion an die Switcheinrichtung umfasst;
wobei
die Switcheinrichtung eingerichtet ist, ein der bereitgestellten Netzwerktopologie entsprechendes Netzwerk mit den Hardwarekomponenten hardwaretechnisch nachzubilden und Netzwerkpakete gemäß der bereitgestellten zu testenden Netzwerkfunktion durch das nachgebildete Netzwerk zu leiten.

Mit dem deterministischen Netzwerkemulator, welcher eine als Hardware ausgebildete Switcheinrichtung umfasst, kann ein deterministisches Verhalten des Netzwerks emuliert werden.

## Beschreibung

Die vorliegende Erfindung betrifft einen deterministischen Netzwerkemulator zum Emulieren eines Netzwerks. Die vorliegende Erfindung betrifft ferner ein Verfahren zum Emulieren eines Netzwerks mit einem deterministischen Netzwerkemulator.

Netzwerkemulatoren können dazu dienen, Netzwerke zu testen, bevor diese tatsächlich im Feld in Betrieb gesetzt werden. Die Emulation eines Netzwerks mit einer großen Anzahl an Netzwerkgeräten kann eine Planung der Ressourcenverteilung erfordern. Eine übliche softwarebasierte Netzwerkemulation führt bei solch einer Netzwerkemulation zu nicht-deterministischen Verhalten von Laufzeiten. Es ist wünschenswert, einen Netzwerkemulator bereitzustellen, der deterministische Netzwerkanalysen durchführen kann.

Vor diesem Hintergrund besteht eine Aufgabe der vorliegenden Erfindung darin, einen verbesserten Netzwerkemulator zum Emulieren eines Netzwerks bereitzustellen. Eine weitere Aufgabe besteht darin, ein verbessertes Verfahren zum Emulieren eines Netzwerks mit einem Netzwerkemulator bereitzustellen.

Gemäß einem ersten Aspekt wird ein deterministischer Netzwerk Emulator zum Emulieren eines Netzwerks vorgeschlagen. Der deterministische Netzwerkemulator umfasst:
eine Switcheinrichtung, die als programmierbare Hardware realisiert ist und eine Vielzahl von Hardwarekomponenten umfasst; und
eine Softwareeinrichtung zum Programmieren der Switcheinrichtung, wobei das Programmieren ein Bereitstellen einer zu testenden Netzwerktopologie sowie einer zu testenden Netzwerkfunktion an die Switcheinrichtung umfasst;
   wobei
die Switcheinrichtung eingerichtet ist, ein der bereitgestellten Netzwerktopologie entsprechendes Netzwerk mit den Hardwarekomponenten hardwaretechnisch nachzubilden und Netzwerkpakete gemäß der bereitgestellten zu testenden Netzwerkfunktion durch das nachgebildete Netzwerk zu leiten.

Mit dem deterministischen Netzwerkemulator kann insbesondere ein deterministisches Verhalten des Netzwerks emuliert und/oder getestet werden. Das emulierte Verhalten des Netzwerks ist insbesondere deshalb deterministisch, weil das Netzwerk durch Hardware (nämlich durch die hardwaretechnische Switcheinrichtung) nachgebildet wird. Die Switcheinrichtung ermöglicht insbesondere eine deterministische Paketweiterleitung auf einer Hardwareplattform, wobei das Switchen in Hardware erfolgt.

Unter "Emulieren eines Netzwerks" wird insbesondere ein Nachbilden des Netzwerks verstanden. Ein Emulator ist dabei insbesondere ein System, mit dem ein solches Netzwerk nachgebildet werden kann.

Das Emulieren und/oder das Testen des Netzwerks mit dem deterministischen Netzwerkemulator erfolgt insbesondere bevor das Netzwerk tatsächlich im Feld eingesetzt wird. Das Testen kann im Rahmen einer Netzwerkkonfiguration und/oder Netzwerkplanung erfolgen. Ergibt das Testen des Netzwerks mit dem deterministischen Netzwerkemulator, dass das Netzwerk die erwünschten Eigenschaften aufweist, wird das Netzwerk beispielsweise im Feld eingesetzt.

Das zu testende Netzwerk besteht insbesondere aus einer Vielzahl von Netzwerkgeräten, wie zum Beispiel Kommunikationsgeräten und Netzwerkswitches.

Die Switcheinrichtung ist insbesondere als Hardwareeinheit ausgebildet. Es kann sich bei der Switcheinrichtung um eine auf dem Markt erhältliche programmierbare Plattform handeln.

Als Switcheinrichtung wird beispielsweise eine Plattform der Serie "Agilio LX SmartNICs" der Firma Netronome verwendet. Alternativ kann auch ein programmierbarer "Data Plane" der Firma Mellanox, ein NetFPGA oder ein "Barefoot Netweorks Tofino 2 Switch" verwendet werden.

Die von der Switcheinrichtung umfassten Hardwarekomponenten sind insbesondere Hardwarebausteine, die durch Programmieren der Switcheinrichtung beliebig miteinander verknüpft werden können und der Programmierung entsprechende Funktionen durchführen können.

Die Softwareeinrichtung kann als Schnittstelle zwischen einem Benutzer, der das Netzwerk mit dem deterministischen Netzwerkemulator emulieren möchte, und der Switcheinrichtung dienen. Die Softwareeinrichtung kann dabei als Steuerung für die Switcheinrichtung eingesetzt werden.

Insbesondere kann die Softwareeinrichtung von dem Benutzer eine Netzwerktopologieinformation erhalten, die angibt, welche Topologie das zu emulierende Netzwerk haben soll. Der Benutzer kann der Softwareeinrichtung ferner Informationen über die zu testenden Eigenschaften des zu testenden Netzwerks übermitteln.

Die Softwareeinrichtung kann beispielsweise die von dem Benutzer empfangene Information in der für die Switcheinrichtung verständige Programmiersprache an die Switcheinrichtung weiterleiten. Dabei stellt die Softwareeinrichtung der Switcheinrichtung insbesondere die zu testende Netzwerktopologie und die zu testende Netzwerkfunktion bereit.

Die bereitgestellte Netzwerktopologie gibt beispielsweise an, wie viele Komponenten das zu testende Netzwerk umfassen soll und wie diese miteinander zu verbinden sind. Die Netzwerktopologie gibt zum Beispiel an, dass die Komponenten in einer Ringtopologie, in einer Sterntopologie und/oder in einer Linientopologie anzuordnen sind.

Die zu testende Netzwerkfunktion (auf Englisch auch "network function") kann Angaben über die durch das zu testende Netzwerk durchzuführende Funktionen enthalten. Die Netzwerkfunktion kann zum Beispiel angeben, welche Netzwerkpakete zwischen welchen Kommunikationspartnern des Netzwerks verschickt werden sollen. Im Folgenden werden die Begriffe "Paket" und "Netzwerkpaket" synonym verwendet.

Durch das Übertragen der Netzwerktopologie und der Netzwerkfunktion wird die Switcheinrichtung insbesondere programmiert. Die Switcheinrichtung kann anhand der empfangenen Information das zu testende Netzwerk nachbilden. Dabei können die Hardwarekomponenten der Switcheinrichtung verwendet werden, um das zu testende Netzwerk der empfangenen Netzwerktopologie entsprechend nachzubilden.

Zudem kann die Switcheinrichtung die zu testende Netzwerkfunktion zum Beispiel durchführen, indem sie die Netzwerkpakete der Netzwerkfunktion entsprechend durch das nachgebildete Netzwerk leitet.

Mit dem deterministischen Netzwerkemulator kann insbesondere ein deterministisches Verhalten des Netzwerks emuliert werden. Das emulierte Verhalten des Netzwerks ist insbesondere deshalb deterministisch, weil das Netzwerk durch Hardware (nämlich durch die hardwaretechnische Switcheinrichtung) nachgebildet wird. Die Switcheinrichtung ermöglicht insbesondere eine deterministische Paketweiterleitung auf einer Hardwareplattform.

Unter einem deterministischen Verhalten ist hier insbesondere zu verstehen, dass keine Zufälligkeit bei der Reihenfolge der Paketübertragung und dergleichen existiert. Stattdessen erfolgt eine genaue Zeitplanung der Paketübertragung. Bei einem deterministischen Verhalten werden insbesondere zeitliche Synchronisierung und/oder zeitbewusste Planung ermöglicht.

Mit dem deterministischen Netzwerkemulator wird insbesondere die Emulation eines Netzwerks verbessert, weil zeitliche Aspekte berücksichtigt werden können. Das Netzwerk kann mit erhöhter Genauigkeit emuliert bzw. nachgebildet werden. Dadurch kann auch das Testen des Netzwerks auf einfache Weise verbessert werden.

Darüber hinaus ist das Verwenden eines Emulators gegenüber einem Simulator vorteilhaft, weil Emulatoren ein realitätsnäheres Testen des Netzwerks ermöglichen.

Gemäß einer Ausführungsform umfasst der deterministische Netzwerkemulator ferner eine Testeinrichtung, die eingerichtet ist, ein Verhalten der Netzwerkpakete beim Durchführen der zu testenden Netzwerkfunktion zu überwachen.

Die Testeinrichtung kann Teil der Switcheinrichtung und/oder der Softwareeinrichtung sein. Alternativ kann sie als eine externe Einheit ausgebildet sein. Die Testeinrichtung kann Teil einer im Folgenden näher beschriebenen Hypervisoreinheit sein. Die Testeinrichtung kann zum Beispiel als ein Monitor ausgebildet sein, an dem Überwachungsergebnisse angezeigt werden.

Die Testeinrichtung dient insbesondere dazu, das Verhalten der Netzwerkpakete, die die zu testende Netzwerkfunktion durchführt, zu überwachen. Insbesondere überwacht die Testeinrichtung besondere Eigenschaften der Netzwerkpakete und/oder des Netzwerks, die durch den Benutzer vorgeschrieben wurden. Die Testeinrichtung kann beispielsweise überwachen, dass die Netzwerkpakete in der richtigen Reihenfolge an die richtigen Empfänger geleitet werden. Insbesondere überwacht die Testeinrichtung das Verhalten der Netzwerkpakete, indem sie abhängig von Paketverzögerung (zeitlicher Abstand zwischen Sende- und Ankunftszeiten), sowie der Differenz von zwei sequentiellen Verzögerungen (Paket Jitter) ein korrektes oder inkorrektes Verhalten erkennt.

Mit dem deterministischen Netzwerkemulator kann insbesondere ein deterministisches Verhalten des Netzwerks getestet werden. Das getestete Verhalten des Netzwerks ist insbesondere deshalb deterministisch, weil das Netzwerk durch Hardware (nämlich durch die hardwaretechnische Switcheinrichtung) nachgebildet wird.

Gemäß einer weiteren Ausführungsform sind zumindest ein Teil der Hardwarekomponenten Netzwerkswitche.

Eine Netzwerkswitch (auf Englisch "Network switch", auch "Netzwerkweiche" genannt) bezeichnet insbesondere ein Kopplungselement des Netzwerks, das Netzwerksegmente miteinander verbindet. Dadurch, dass ein Teil der Hardwarekomponenten der Switcheinrichtung Netzwerkswitche sind, kann die Switcheinrichtung zum Beispiel das zu testende Netzwerk vollständig nachbilden und auch die Paketeweiterleitung im nachgebildeten Netzwerk ermöglichen.

Gemäß einer weiteren Ausführungsform umfasst die Switcheinrichtung ferner:
zumindest eine Weiterleitungstabelle, die eine Netzwerkpaketweiterleitung durch eine Hardwarekomponente innerhalb des nachzubildenden Netzwerks gemäß der zu testenden Netzwerkfunktion definiert; und
eine Steuertabelle, die angibt, welche Weiterleitungstabelle für die Weiterleitung eines Netzwerkpakets, das an einer vorbestimmten Schnittstelle des Netzwerks empfangen wird, zu berücksichtigen ist.

Die Weiterleitungstabelle und/oder die Steuertabelle der Switcheinrichtung können durch das Programmieren der Switcheinrichtung durch die Softwareeinrichtung verändert werden. Die Tabellen enthalten insbesondere die Information, die zum Nachbilden des zu testenden Netzwerks und zum Durchführen der Netzwerkfunktion dient.

Die Weiterleitungstabelle definiert dabei beispielsweise, an welcher Ausgangsschnittstelle einer Hardwarekomponente (insbesondere einer Netzwerkswitch) ein Paket ausgegeben werden soll, das an einer bestimmten Eingangsschnittstelle dieser Hardwarekomponente empfangen wird. Die Weiterleitungstabelle bestimmt somit insbesondere die Weiterleitung der Pakete durch die Hardwarekomponenten. In einigen Ausführungsformen ist jeder Hardwarekomponente (oder zumindest jeder Netzwerkswitch) eine Weiterleitungstabelle zugeordnet.

Die Steuertabelle kann als übergeordnete Tabelle betrachtet werden, welche für jedes Paket hinsichtlich der Schnittstelle, an der das Paket empfangen wird, angibt, welche Weiterleitungstabelle zu verwenden ist.

Die Tabellen tragen insbesondere dazu bei, die Netzwerktopologie auf einfache Weise nachzubilden und die Paketeweiterleitung zu steuern.

Gemäß einer weiteren Ausführungsform ist die Switcheinrichtung in der Programmiersprache P4 (Programming Protocol-Independent Packet Processors) programmierbar und die Softwareeinrichtung ist eingerichtet, die Switcheinrichtung in P4 zu programmieren.

In alternativen Ausführungsformen sind aber auch jegliche Programmiersprachen, zum Beispiel "Protocol Oblivious Forwarding" (POF) von Huawei oder "PX" von Xilinx, denkbar.

Gemäß einer weiteren Ausführungsform umfasst die Softwareeinrichtung eine Hypervisoreinheit, die für jede der Hardwarekomponenten des mit der Switcheinrichtung nachgebildeten Netzwerks eine virtuelle Hardwarekomponente aufweist.

Die Hypervisoreinheit kann insbesondere die Switcheinrichtung steuern, indem sie für das Programmieren der Switcheinrichtung zuständig ist.

Gemäß einer weiteren Ausführungsform sind die jeweiligen virtuellen Hardwarekomponenten eingerichtet, zum Programmieren der Softwareeinrichtung die jeweils zugehörige Hardwarekomponente zu programmieren.

Insbesondere kann jede virtuelle Hardwarekomponente genau eine, nämlich die zugehörige Hardwarekomponente programmieren. Zum Beispiel kann die virtuelle Hardwarekomponente, die einer ersten Netzwerkswitch zugeordnet ist, lediglich die Weiterleitungstabelle dieser ersten Netzwerkswitch umschreiben. Ein Zugriff auf andere Weiterleitungstabellen durch diese virtuelle Hardwarekomponente unterbleibt dabei.

Durch die einzigartige Zuordnung der virtuellen Hardwarekomponenten und der Hardwarekomponenten kann zum Beispiel sichergestellt werden, dass die Logik zur Programmierung dieser Hardwarekomponenten, bzw. der zugewiesen Weiterleitungstabellen, pro Netzwerkswitch realisiert werden kann. Das ist analog zu den üblichen physikalischen Switchen, wo die Switch-Logik pro Switch implementiert wird und das Gesamtsystem dementsprechend anhand der Entscheidungen einer verteilten Logik funktionieren muss. Beispiele dieser verteilten isolierten Logikinstanzen sind MAC Learning, OSPF, IS-IS Anwendungen bei herkömmlichen Switchen/Routern.

In alternativen Ausführungsformen umfasst die Hypervisoreinheit eine einzige Steuerkomponente, die zur Steuerung und/oder Programmierung aller Hardwarekomponenten der Switcheinrichtung dient. In diesem Fall erfolgt insbesondere keine Isolierung der Steuerung der einzelnen Hardwarekomponenten. Stattdessen steuert die Steuerkomponente die Logik des Gesamtsystems (also der gesamten Hardwarekomponenten) zentral an. Das ist analog zu einem Software-Defined Network, wo eine zentrale Steuerung alle Netzwerkswitche ansteuert.

Gemäß einer weiteren Ausführungsform umfasst die Softwareeinrichtung ferner eine Linuxnetzwerkstapeleinheit, wobei alle durch das nachgebildete Netzwerk geleiteten Pakete von der Switcheinrichtung in die Linuxnetzwerkstapeleinheit und zurück gesendet werden, sodass die Linuxnetzwerkstapeleinheit Effekte, die in einem realen Netzwerk bei der Weiterleitung von Paketen auftreten, nachbildet.

Die Linuxnetzwerkstapeleinheit kann auf Englisch "Linux Networking Stack" bezeichnet werden. Die durch die Linuxnetzwerkstapeleinheit geschickten Pakete werden insbesondere aus der Switcheinrichtung herausgeleitet, durch die Linuxnetzwerkstapeleinheit geleitet und zurück in die Switcheinrichtung geschickt. Ein Vorteil bei der Verwendung einer Linuxnetzwerkstapeleinheit ist, dass ein reales Netzwerk besser nachgebildet werden kann, weil die Paketübertragung besser emuliert werden kann. Dadurch kann ein besseres Testen des Netzwerks erfolgen.

Gemäß einer weiteren Ausführungsform umfassen die durch die Linuxnetzwerkstapeleinheit nachgebildeten Effekte, die in einem realen Netzwerk bei der Weiterleitung von Paketen auftreten, Bandbreiten, Verzögerungen und/oder Verwerfen von Netzwerkpaketen. Die Linuxnetzwerkstapeleinheit dient insbesondere dazu, für physikalisch begrenzte Eigenschaften der Paketübertragung aufzukommen.

Gemäß einem zweiten Aspekt wird eine Softwareeinrichtung für den deterministischen Netzwerkemulator gemäß dem ersten Aspekt oder gemäß einer Ausführungsform des ersten Aspekts bereitgestellt. Die Softwareeinrichtung ist zum Programmieren einer Switcheinrichtung geeignet, wobei das Programmieren ein Bereitstellen einer zu testenden Netzwerktopologie sowie einer zu testenden Netzwerkfunktion an die Switcheinrichtung umfasst.

Die Ausführungsformen und Merkmale der Softwareeinrichtung, die gemäß dem ersten Aspekt beschrieben wurden, gelten für die vorgeschlagene Softwareeinrichtung entsprechend.

Gemäß einem dritten Aspekt wird ein Verfahren zum Emulieren eines Netzwerks mit einem deterministischen Netzwerkemulator, der eine Switcheinrichtung, die als programmierbare Hardware realisiert ist und eine Vielzahl von Hardwarekomponenten umfasst, sowie eine Softwareeinrichtung umfasst, vorgeschlagen. Das Verfahren umfasst:
Programmieren der Switcheinrichtung durch die Softwareeinrichtung, wobei das Programmieren ein Bereitstellen einer zu testenden Netzwerktopologie sowie einer zu testenden Netzwerkfunktion an die Switcheinrichtung umfasst;
hardwaretechnisches Nachbilden eines der bereitgestellten Netzwerktopologie entsprechenden Netzwerks mit den Hardwarekomponenten der Switcheinrichtung; und
Leiten von Netzwerkpaketen gemäß der bereitgestellten zu testenden Netzwerkfunktion durch das nachgebildete Netzwerk.

Die für den vorgeschlagenen deterministischen Netzwerkemulator gemäß dem ersten Aspekt oder gemäß einer Ausführungsform des ersten Aspekts beschriebenen Ausführungsformen und Merkmale gelten für das vorgeschlagene Verfahren gemäß dem dritten Aspekt entsprechend.

Insbesondere umfasst das Verfahren ein Überwachen eines Verhaltens der Netzwerkpakete beim Durchführen der zu testenden Netzwerkfunktion.

Weiterhin wird ein Computerprogrammprodukt vorgeschlagen, welches auf einer programmgesteuerten Einrichtung die Durchführung des Verfahrens gemäß dem dritten Aspekt veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt einen deterministischen Netzwerkemulator gemäß einer ersten Ausführungsform;
Fig. 2 zeigt ein Verfahren zum Emulieren eines Netzwerks mit einem deterministischen Netzwerkemulator;
Fig. 3 zeigt einen deterministischen Netzwerkemulator gemäß einer zweiten Ausführungsform;
Fig. 4 zeigt einen deterministischen Netzwerkemulator gemäß einer dritten Ausführungsform;
Fig. 5 zeigt ein Beispiel für ein nachgebildetes Netzwerk;
Fig. 6 zeigt ein erstes Beispiel für eine Linuxnetzwerkstapeleinheitstabelle;
Fig. 7 zeigt ein erstes Beispiel für Weiterleitungs- und Steuertabellen;
Fig. 8 zeigt ein zweites Beispiel für eine Linuxnetzwerkstapeleinheitstabelle; und
Fig. 9 zeigt ein zweites Beispiel für Weiterleitungs- und Steuertabellen.

In den Figuren sind gleiche oder funktionsgleiche Elemente mit denselben Bezugszeichen versehen worden, sofern nichts anderes angegeben ist.

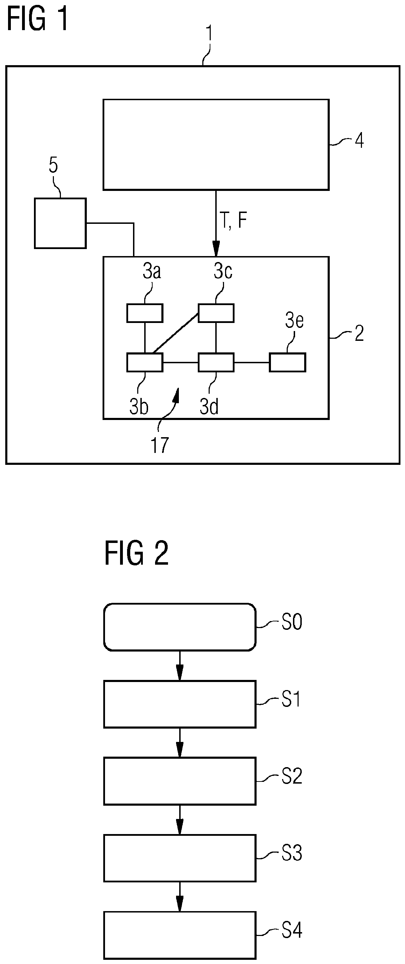

Die Fig. 1 zeigt einen deterministischen Netzwerkemulator 1 gemäß einer ersten Ausführungsform. Der deterministische Netzwerkemulator 1, im Folgenden auch nur "Netzwerkemulator 1", umfasst eine Switcheinrichtung 2, eine Softwareeinrichtung 4 und eine Testeinrichtung 5.

Die Switcheinrichtung 2, auch "Switchplattform" genannt, ist eine programmierbare Hardwarekomponente. In der Fig. 1 handelt es sich bei der Switcheinrichtung 2 um eine Plattform der Serie "Agilio LX SmartNICs" der Firma Netronome, die in der Programmiersprache P4 programmierbar ist. Die Switcheinrichtung 2 weist fünf Hardwarekomponenten 3a - 3e auf, von denen hier drei Hardwarekomponenten 3b - 3d als Netzwerkswitches und zwei Hardwarekomponenten 3a und 3e als Kommunikationsgeräte ausgebildet sind.

In weiteren Ausführungsformen könnten als Kommunikationsgeräte 3a und 3e anstelle der Hardwarekomponenten auch extern an die Switcheinrichtung 2 angeschlossene Geräte verwendet werden, wie zum Beispiel Roboterarme und dazugehörige Fernsteuerungen. Diese Endpunkte 3a, 3e könnten auch als virtualisierte Dockercontainer (Webserver und Clientbrowser) angeschlossen sein. Wichtig dabei ist, dass die Kommunikationsgeräte 3a, 3e bzw. Endknoten keine "emulierten" Knoten sind, sondern reale physikalische Anwendungen.

Die Softwareeinrichtung 4 ist eine Softwarekomponente, die dazu dient, die Switcheinrichtung 2 zu programmieren. Dies wird im Folgenden noch näher beschrieben.

Der Netzwerkemulator 1 der Fig. 1 kann zum Emulieren eines Netzwerks eingesetzt werden. Hierzu kann der Netzwerkemulator 1 ein Verfahren zum Emulieren des Netzwerkemulators 1 durchführen. Solch ein Verfahren ist beispielsweise in der Fig. 2 gezeigt.

In einem Startschritt S0 der Fig. 2 wird ein deterministischer Netzwerkemulator 1 gemäß Fig. 1 bereitgestellt. In einem darauffolgenden Schritt S1 wird die Switcheinrichtung 2 durch die Softwareeinrichtung 4 programmiert. Hierzu überträgt die Softwareeinrichtung 4 eine zu testende Netzwerktopologie T sowie eine zu testende Netzwerkfunktion F an die Switcheinrichtung 2. Die Übertragung erfolgt hier über ein nicht dargestelltes Kabel. Es ist aber auch möglich, eine kabellose Übertragung vorzusehen.

Die zu testende Netzwerktopologie T ist die Topologie des Netzwerks, das der Netzwerkemulator 1 emulieren bzw. testen soll. Die Netzwerktopologie T gibt an, wie viele Teilnehmergeräte das zu testende Netzwerk haben soll und wie diese miteinander verbunden sein sollen. Im vorliegenden Beispiel gibt die Netzwerktopologie T an, dass das Netzwerk zwei Kommunikationsgeräte umfassen soll, die über drei in einer Ringtopologie angeordneten Switches miteinander kommunizieren sollen.

Die zu testende Netzwerkfunktion F gibt an, an welchen Funktionen das zu testende Netzwerk getestet werden soll. Die zu testende Netzwerkfunktion F enthält zum Beispiel Angaben darüber, welche Netzwerkteilnehmer oder Netzwerkgeräte miteinander kommunizieren und welche Ressourcen bereitgestellt werden. Hier gibt die zu testende Netzwerkfunktion F an, wie die zwei Kommunikationsgeräte über die Switches in Ringtopologie miteinander Netzwerkpakete austauschen sollen.

In einem Schritt S2 der Fig. 2 bildet die Switcheinrichtung 2 mit ihren Hardwarekomponenten 3a - 3e das durch die Netzwerktopologie T vorgegebene Netzwerk nach. Das heißt, dass die Hardwarekomponenten 3a - 3e so miteinander verbunden werden, dass sie ein Netzwerk 17 mit der Netzwerktopologie T nachbilden.

Dabei setzt die Switcheinrichtung 2 die Hardwarekomponenten 3a und 3e als Kommunikationsgeräte ein und schaltet die Hardwarekomponenten 3b - 3d als Switches dazwischen. Wie durch die Netzwerktopologie T vorgeschrieben, bilden die Switches 3b - 3d dabei eine Ringtopologie.

In einem Schritt S3 wird die zu testende Netzwerkfunktion F getestet. Dazu leitet die Switcheinrichtung 2 entsprechen der Netzwerkfunktion F Netzwerkpakete zwischen den zwei Kommunikationsgeräten 3a, 3e über die Switches 3b - 3d hin und her. Die Switcheinrichtung 2 ermöglicht eine deterministische Paketweiterleitung auf einer Hardwareebene, weil das Switchen in Hardware erfolgt.

In einem fakultativen Schritt S4 wird das Verhalten der Netzwerkpakete beim Durchführen der zu testenden Netzwerkfunktion F durch die Testeinrichtung 5 überwacht. Hierzu verfolgt die Testeinrichtung 5 die durch das nachgebildete Netzwerk 17 geleitete Pakete und überwacht, ob diese alle ihr gewünschtes Ziel erreichen und ob dies in der richtigen Reihenfolge erfolgt.

Mit dem deterministischen Netzwerkemulator 1 kann ein deterministisches Verhalten des Netzwerks 17 emuliert und/oder getestet werden. Das getestete Verhalten des Netzwerks 17 ist deshalb deterministisch, weil das Netzwerk 17 durch Hardware (nämlich durch die hardwaretechnische Switcheinrichtung 2 mit ihren Hardwarekomponenten 3a - 3e) nachgebildet wird.

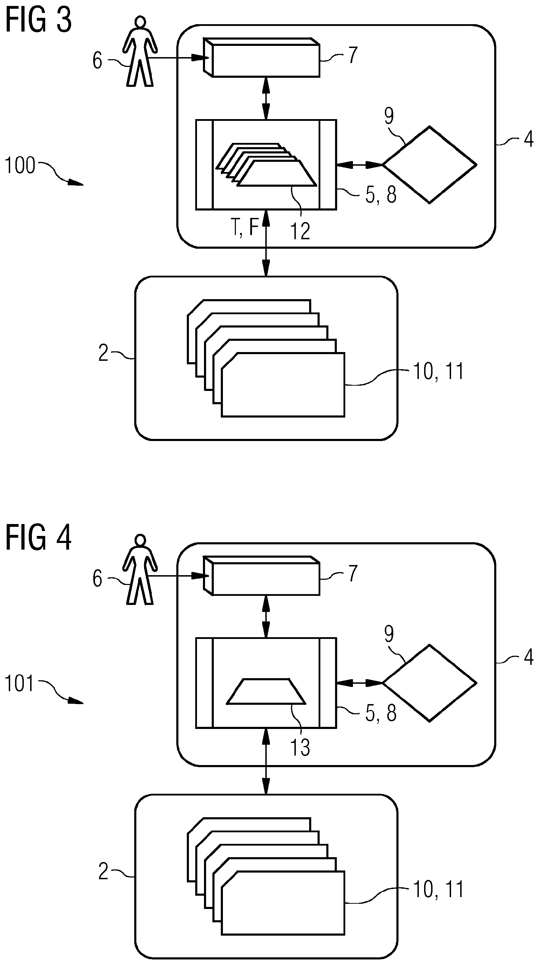

Die Fig. 3 zeigt einen deterministischen Netzwerkemulator 100 gemäß einer zweiten Ausführungsform. Der Netzwerkemulator 100 gemäß der zweiten Ausführungsform unterscheidet sich von dem aus der ersten Ausführungsform (Fig. 1) insbesondere dadurch, dass die Testeinrichtung 5 Teil der Softwareeinrichtung 4 ist.

Darüber hinaus umfasst die Softwareeinrichtung 4 der Fig. 2 eine Benutzerschnittstelle 7, eine Hypervisoreinheit 8 und eine Linuxnetzwerkstapeleinheit 9.

Bei der Benutzerschnittstelle 7 handelt es sich um eine Schnittstelle, über die ein Benutzer 6 Eingaben über das zu testende Netzwerk machen kann. Zu diesen Eingaben gehören zum Beispiel Angaben zur Netzwerktopologie T und zur Netzwerkfunktion F. Die Benutzerschnittstelle 7, auch "Emulatorabstraktion" ist hier eine graphische Benutzeroberfläche (auf Englisch GUI - graphical user interface).

Die Benutzerschnittstelle 7 verarbeitet diese Benutzereingaben und leitet sie an die Hypervisoreinheit 8 weiter. Die Hypervisoreinheit 8 umfasst mehrere virtuelle Hardwarekomponenten 12, die jede einer Hardwarekomponente 3a - 3e der Switcheinrichtung 2 entsprechen. Die virtuellen Hardwarekomponenten 12 können als Steuereinheiten für die jeweiligen dazugehörigen Hardwarekomponenten 3a - 3e betrachtet werden. Nämlich dient jede virtuelle Hardwarekomponente 12 dazu, die dazugehörige Hardwarekomponente 3a - 3e hinsichtlich der von der Benutzerschnittstelle 7 empfangenen Daten zu programmieren und/oder zu verändern. Im Beispiel der Fig. 3 erfolgt das Übertragen der zu testenden Netzwerktopologie T und der zu testenden Netzwerkfunktion F an die Switcheinrichtung 2 somit verteilt über alle virtuellen Hardwarekomponenten 12.

Die virtuellen Hardwarekomponenten 12 sind hier als ein Standard Linux-basiertes Programm implementiert. Die Hypervisoreinheit 8 dient der Isolierung der Zugriffe durch die einzelnen virtuellen Hardwarekomponenten 12, sodass jede virtuelle Hardwarekomponente 12 lediglich diejenige Hardwarekomponente 3a - 3e verändern kann, die ihr zugehörig ist.

In der Fig. 3 sind die einzelnen Hardwarekomponenten 3a - 3e der Switcheinrichtung 2 nicht dargestellt. Stattdessen zeigt die Fig. 3 Weiterleitungstabellen 10, die den jeweiligen Netzwerkswitches 3b - 3d zugeordnet sind. Jede Netzwerkswitch 3b - 3d hat eine eigene Weiterleitungstabelle 10, die angibt, wie diese Netzwerkswitch 3b - 3d eingehende Pakete weiterleiten soll. Die Einträge in den Weiterleitungstabellen 10 werden durch die zugehörigen virtuellen Hardwarekomponenten 12 abgeändert, um der zu testenden Netzwerktopologie T zu entsprechen.

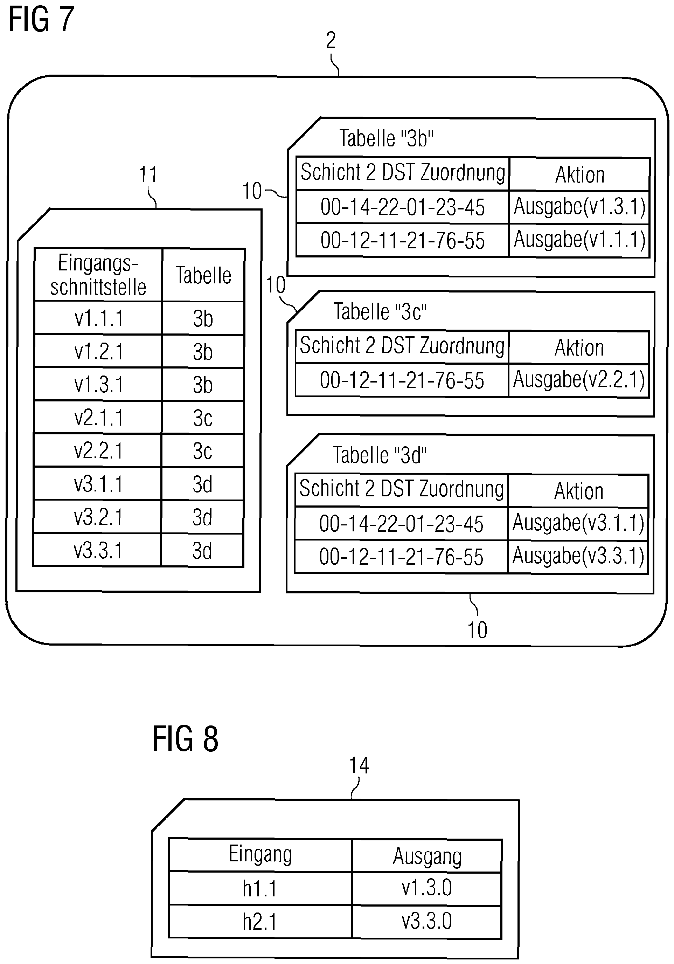

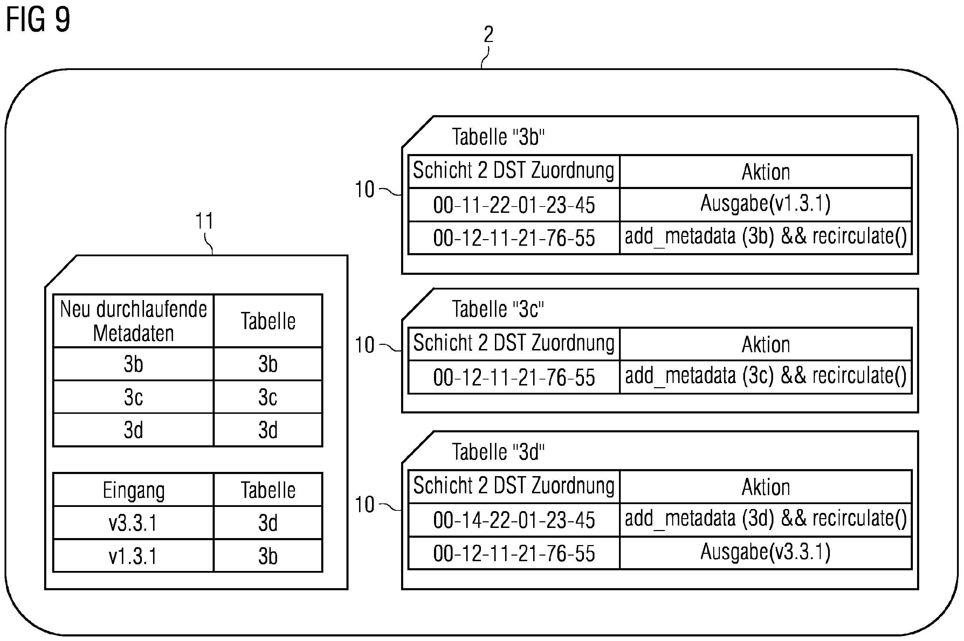

Solche Weiterleitungstabellen 10 sind zum Beispiel in den Fig. 7 und 9 gezeigt. Die Weiterleitungstabellen 10 geben jeweils an, über welche Schnittstelle einer Netzwerkswitch 3b - 3d ein Paket weitergeleitet werden soll, welches über eine bestimmte Schnittstelle der Netzwerkswitch 3b - 3d empfangen wird.

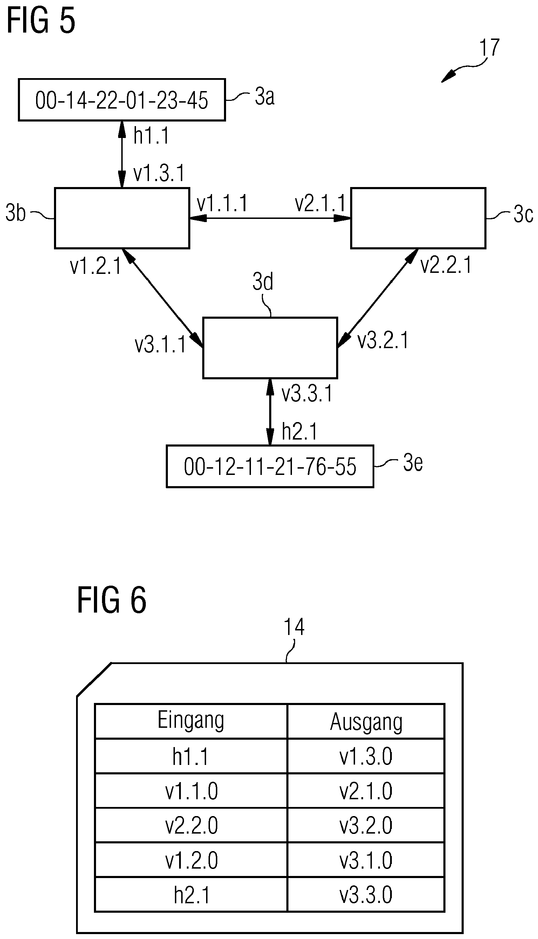

Die Schnittstellen der Netzwerkswitches 3b - 3d sind in der Fig. 5 zu sehen und mit v1.3.1, v1.1.1, v1.2.1, v2.1.1 usw. bezeichnet. In den Weiterleitungstabellen 10 sind entsprechende Schnittstellenbezeichnungen wiederzufinden. In der Fig. 5 sind die Schnittstellen der Kommunikationsgeräte 3a, 3e mit h1.1 und h2.1 bezeichnet.

Die Switcheinrichtung 2 der Fig. 3 umfasst ferner eine Steuertabelle 11. Die Fig. 7 und 9 zeigen Beispiele einer solchen Steuertabelle 11. Die Steuertabelle 11 dient dazu anzugeben, welche Weiterleitungstabelle 10 für ein Netzwerkpaket, das an einer der Schnittstellen der Netzwerkswitches 3b - 3d eingeht, zu verwenden ist. Die Steuertabelle 11 führt somit die Angaben der einzelnen Weiterleitungstabellen 10 zusammen. Die Einträge der Steuertabelle 11 werden durch die Hypervisoreinheit 8 verändert und angepasst, um der Netzwerktopologie T zu entsprechen.

Im Ausführungsbeispiel der Fig. 3 umfasst die Softwareeinrichtung ferner die bereits benannte Linuxnetzwerkstapeleinheit 9. Diese dient dazu, die Emulation des Netzwerks 17 zu verbessern, indem sie in realen Netzwerken beim Weiterleiten von Netzwerkpaketen auftretende Effekte nachbildet. Solche Effekte sind zum Beispiel eine zeitliche Verzögerung bei der Paketübertragung und/oder ein Verwerfen von Netzwerkpaketen. Zum Nachbilden dieser Effekte wird jedes Netzwerkpaket, dass in dem nachgebildeten Netzwerk 17 herumgeschickt wird, durch die Linuxnetzwerkstapeleinheit 9 der Softwareeinheit 4 geleitet und anschließend wieder zurück in die Switcheinrichtung 2 geleitet.

In der Linuxnetzwerkstapeleinheit 9 wird das Paket entsprechend einer Linuxnetzwerkstapeleinheitstabelle 14 weitergeleitet. Diese ist beispielsweise in der Fig. 6 oder 8 dargestellt. Die Linuxnetzwerkstapeleinheitstabelle 14 gibt an, wie die Netzwerkpakete zwischen den Hardwarekomponenten 3a - 3e weiterzuleiten sind. In der Fig. 6 gibt die Linuxnetzwerkstapeleinheitstabelle 14 zum Beispiel an, dass Netzwerkpakete, die von der Schnittstelle h1.1 kommen, an die Schnittstelle v1.3.0 weiterzuleiten sind.

Der deterministische Netzwerkemulator 100 der Fig. 3 kann - ähnlich wie der Netzwerkemulator 1 der Fig. 1 - das Verfahren zum Emulieren eines Netzwerks gemäß Fig. 2 durchführen. Dabei erfolgt die Netzwerkpaketübertragung wie anhand der Fig. 5, 6 und 7 bereits beschrieben.

Die Fig. 4 zeigt einen deterministischen Netzwerkemulator 101 gemäß einer dritten Ausführungsform. Der deterministische Netzwerkemulator 101 gemäß der dritten Ausführungsform unterscheidet sich von dem deterministischen Netzwerkemulator 100 gemäß der zweiten Ausführungsform (Fig. 3) lediglich dadurch, dass anstelle der mehreren virtuellen Hardwarekomponenten 12 eine einzelne Steuereinheit 13 in der Hypervisoreinheit 8 vorgesehen ist.

Die einzelne Steuereinheit 13 dient dazu, alle Hardwarekomponenten 3a - 3e zu verändern und übernimmt somit die Gesamtfunktion der zuvor beschriebenen virtuellen Hardwarekomponenten 12. Die einzelne Steuereinheit 13 ist somit für die Übertragung der Netzwerktopologie T und der zu testenden Netzwerkfunktion F zuständig. Die Weiterleitungstabellen 10 und die Steuertabelle 11 werden hier einzig durch die Steuereinheit 13 verändert.

Der deterministische Netzwerkemulator 101 der Fig. 4 kann - ähnlich wie der Netzwerkemulator 1 der Fig. 1 und wie der Netzwerkemulator 100 der Fig. 3 - das Verfahren zum Emulieren eines Netzwerks gemäß Fig. 2 durchführen. Dabei erfolgt die Netzwerkpaketübertragung wie anhand der Fig. 5, 6 und 7 bereits beschrieben.

Anstelle der anhand der Fig. 5, 6 und 7 beschriebenen Paketübertragung, kann die Paketübertragung auch wie in den Fig. 8 und 9 dargestellt erfolgen. Der Vorteil dabei ist, dass eine Netzwerkpakete nicht durch die Linuxnetzwerkstapeleinheit 9 geleitet werden müssen. Daher kann die Linuxnetzwerkstapeleinheit 9 aus den Netzwerkemulatoren 100 und 101 wegelassen werden.

Die Fig. 9 zeigt Weiterleitungstabellen 10 und eine Steuertabelle 11, die sich von denen aus der Fig. 7 unterscheiden. Wenn ein Netzwerkpaket zum Beispiel an der Schnittstelle v1.3.1 in die Hardwarekomponente 3b eingeht, gibt die Steuertabelle 11 an, dass die Weiterleitungstabelle 10 die richtige Weiterleitung bestimmt. Hier wird das Netzwerkpaket jedoch nicht an der Ausgangsschnittstelle v1.1.1 ausgegeben, um von dort aus weitergeleitet zu werden, sondern mit einem Marker gekennzeichnet, der einen erneuten Durchlauf angibt ("recirculate" in Fig. 9). Das Hinzufügen des Markers als Metadaten ist in der Fig. 9 mit "add_metadata (3b - 3d)" gekennzeichnet und erfolgt basierend auf der Ausgangsschnittstelle. Das Netzwerkpaket wird dann erneut durch die Steuertabelle 11 geleitet, wo es dann in die Weiterleitungstabelle 10 der Netzwerkswitch 3c geleitet wird. Diese Schritte wiederholen sich, bis das Netzwerkpaket, wie durch die Weiterleitungstabelle 10 der Netzwerkswitch 3d angegeben, an die Schnittstelle v3.3.1 ausgegeben wird. Das Netzwerkpaket kann somit durch die Netzwerkswitches 3b, 3c und 3d geleitet werden, ohne eine Linuxnetzwerkstapeleinheit 9 zu benötigen.

Obwohl die vorliegende Erfindung anhand von Ausführungsbeispielen beschrieben wurde, ist sie vielfältig modifizierbar. Zum Beispiel kann die Anzahl an Hardwarekomponenten 3a - 3e der Switcheinrichtung 2 auch kleiner oder größer als fünf sein. Die zu testende Netzwerktopologie T muss keine Ringtopologie vorschreiben, sondern kann auch eine Sterntopologie oder dergleichen vorschreiben. Die Sprache, in der die Switcheinrichtung 2 programmiert wird, kann eine beliebige Programmiersprache sein. Der Inhalt der Weiterleitungstabellen 10 und der Steuertabelle 11 kann von den Inhalten aus den Fig. 7 und 9 abweichen, um die Netzwerkfunktion F nachzubilden.

### Bezugszeichenliste

- 1: deterministischer Netzwerkemulator
- 2: Switcheinrichtung
- 3a - 3e: Hardwarekomponente
- 4: Softwareeinrichtung
- 5: Testeinrichtung
- 6: Benutzer
- 7: Benutzerschnittstelle
- 8: Hypervisoreinheit
- 9: Linuxnetzwerkstapeleinheit
- 10: Weiterleitungstabelle
- 11: Steuertabelle
- 12: virtuelle Hardwarekomponente
- 13: Steuereinheit
- 14: Linuxnetzwerkstapeleinheitstabelle
- 17: nachgebildetes Netzwerk
- 100: deterministischer Netzwerkemulator
- 101: deterministischer Netzwerkemulator
- F: Netzwerkfunktion
- S0 - S4: Verfahrensschritte
- T: Netzwerktopologie

## Patentansprüche

1. Deterministischer Netzwerkemulator (1, 100, 101) zum Emulieren eines Netzwerks, umfassend:
eine Switcheinrichtung (2), die als programmierbare Hardware realisiert ist und eine Vielzahl von Hardwarekomponenten (3a - 3e) umfasst; und
eine Softwareeinrichtung (4) zum Programmieren der Switcheinrichtung (2), wobei das Programmieren ein Bereitstellen einer zu testenden Netzwerktopologie (T) sowie einer zu testenden Netzwerkfunktion (F) an die Switcheinrichtung (2) umfasst;
wobei
die Switcheinrichtung (2) eingerichtet ist, ein der bereitgestellten Netzwerktopologie (T) entsprechendes Netzwerk (17) mit den Hardwarekomponenten (3a - 3e) hardwaretechnisch nachzubilden und Netzwerkpakete gemäß der bereitgestellten zu testenden Netzwerkfunktion (F) durch das nachgebildete Netzwerk (17) zu leiten.

2. Deterministischer Netzwerkemulator nach Anspruch 1,
**dadurch gekennzeichnet,**
**dass** der deterministische Netzwerkemulator (1, 100, 101) ferner eine Testeinrichtung (5) umfasst, die eingerichtet ist, ein Verhalten der Netzwerkpakete beim Durchführen der zu testenden Netzwerkfunktion (F) zu überwachen.

3. Deterministischer Netzwerkemulator nach Anspruch 1 oder 2, **dadurch gekennzeichnet,**
**dass** zumindest ein Teil der Hardwarekomponenten (3a - 3e) Netzwerkswitche sind.

4. Deterministischer Netzwerkemulator nach einem der Ansprüche 1 bis 3,
**dadurch gekennzeichnet,**
**dass** die Switcheinrichtung (2) ferner umfasst:
zumindest eine Weiterleitungstabelle (10), die eine Netzwerkpaketweiterleitung durch eine Hardwarekomponente (3a - 3e) innerhalb des nachzubildenden Netzwerks gemäß der zu testenden Netzwerkfunktion (F) definiert; und
eine Steuertabelle (11), die angibt, welche Weiterleitungstabelle (10) für die Weiterleitung eines Netzwerkpakets, das an einer vorbestimmten Schnittstelle des Netzwerks (17) empfangen wird, zu berücksichtigen ist.

5. Deterministischer Netzwerkemulator nach einem der Ansprüche 1 bis 4,
**dadurch gekennzeichnet,**
**dass** die Switcheinrichtung (2) in der Programmiersprache P4 (Programming Protocol-Independent Packet Processors) programmierbar ist und die Softwareeinrichtung (4) eingerichtet ist, die Switcheinrichtung (2) in P4 zu programmieren.

6. Deterministischer Netzwerkemulator nach einem der Ansprüche 1 bis 5,
**dadurch gekennzeichnet,**
**dass** die Softwareeinrichtung (4) eine Hypervisoreinheit (8) umfasst, die für jede der Hardwarekomponenten (3a - 3e) des mit der Switcheinrichtung (2) nachgebildeten Netzwerks (17) eine virtuelle Hardwarekomponente (12) aufweist.

7. Deterministischer Netzwerkemulator nach Anspruch 6,
**dadurch gekennzeichnet,**
**dass** die jeweiligen virtuellen Hardwarekomponenten (12) eingerichtet sind, zum Programmieren der Softwareeinrichtung (4) die jeweils zugehörige Hardwarekomponente (3a - 3e) zu programmieren.

8. Deterministischer Netzwerkemulator nach einem der Ansprüche 1 bis 7,
**dadurch gekennzeichnet,**
**dass** die Softwareeinrichtung (4) ferner eine Linuxnetzwerkstapeleinheit (9) umfasst, wobei alle durch das nachgebildete Netzwerk (17) geleiteten Netzwerkpakete von der Switcheinrichtung (2) in die Linuxnetzwerkstapeleinheit (9) und zurückgesendet werden, sodass die Linuxnetzwerkstapeleinheit (9) Effekte, die in einem realen Netzwerk bei der Weiterleitung von Netzwerkpaketen auftreten, nachbildet.

9. Deterministischer Netzwerkemulator nach Anspruch 8,
**dadurch gekennzeichnet,**
**dass** die durch die Linuxnetzwerkstapeleinheit (9) nachgebildeten Effekte, die in einem realen Netzwerk bei der Weiterleitung von Netzwerkpaketen auftreten, Bandbreiten, Verzögerungen und/oder Verwerfen von Netzwerkpaketen umfassen.

10. Softwareeinrichtung (4) für den deterministischen Netzwerkemulator (1, 100, 101) gemäß einem der Ansprüche 1 bis 9, welche zum Programmieren einer hardwaretechnischen Switcheinrichtung (2) geeignet ist, wobei das Programmieren ein Bereitstellen einer zu testenden Netzwerktopologie (T) sowie einer zu testenden Netzwerkfunktion (F) an die Switcheinrichtung (2) umfasst.

11. Verfahren zum Emulieren eines Netzwerks mit einem deterministischen Netzwerkemulator (1, 100, 101), der eine Switcheinrichtung (2), die als programmierbare Hardware realisiert ist und eine Vielzahl von Hardwarekomponenten (3a - 3e) umfasst, sowie eine Softwareeinrichtung (4) umfasst, wobei das Verfahren umfasst:
Programmieren (S1) der Switcheinrichtung (2) durch die Softwareeinrichtung (4), wobei das Programmieren ein Bereitstellen einer zu testenden Netzwerktopologie sowie einer zu testenden Netzwerkfunktion (F) an die Switcheinrichtung (2) umfasst;
hardwaretechnisches Nachbilden (S2) eines der bereitgestellten Netzwerktopologie (T) entsprechenden Netzwerks (17) mit den Hardwarekomponenten (3a - 3e) der Switcheinrichtung (2); und
Leiten (S3) von Netzwerkpaketen gemäß der bereitgestellten zu testenden Netzwerkfunktion (F) durch das nachgebildete Netzwerk (17).

12. Computerprogrammprodukt, welches auf einer programmgesteuerten Einrichtung die Durchführung des Verfahrens nach Anspruch 11 veranlasst.
